# EUROPÄISCHE PATENTSCHRIFT

(11) **EP 0 920 951 B1**
(45) Veröffentlichungstag und Bekanntmachung des Hinweises auf die Patenterteilung: **07.05.2003**
(21) Anmeldenummer: 98122982.6
(22) Anmeldetag: 03.12.1998
(51) Int. Cl.: B23Q 7/04, B23Q 7/10, B23Q 7/14, B23Q 7/16, B21D 43/20

(54) **Handhabungssystem zum Zuführen von Werkstücken oder Werkstückträgern zu einer Bearbeitungseinrichtung**
Handling system for the feeding of workpieces or workpiece-holders to a machine tool
Système de manipulation pour l'alimentation des pièces ou porte-pièces vers une machine-outil

(30) Priorität: 04.12.1997 DE 19753845
(43) Veröffentlichungstag der Anmeldung: 09.06.1999
(73) Patentinhaber: LIEBHERR-VERZAHNTECHNIK GmbH, 87437 Kempten (DE)
(72) Erfinder: Kennerknecht, Wilhelm, 87509 Immenstadt (DE); Wagner, Wolfgang, 87648 Aitrang (DE)
(74) Vertreter: Klunker . Schmitt-Nilson . Hirsch

(56) Entgegenhaltungen:
- EP-A- 0 743 138
- DE-A- 19 652 195
- DE-A- 19 718 090
- DE-U- 8 914 604

## Beschreibung

Zu bearbeitende Werkstücke werden häufig auf übereinandergestapelten Paletten einem Bearbeitungszentrum zugeführt. Um jedes einzelne Werkstück aus diesem Palettenstapel bearbeiten zu können, wird üblicherweise die oberste Palette mittels einem Palettiergerät von dem Palettenstapel abgehoben und in eine Zuführposition bewegt, in der sie getaktet weiterbewegt wird, so daß eine Ladeeinrichtung die Werkstücke der Palette nach und nach einzeln entnehmen, einer Bearbeitungseinrichtung zuführen und in die Palette zurückführen kann. Das bearbeitete Werkstück wird dann wieder an die vorherige Stelle zurückgelegt, und wenn alle Werkstücke der Palette bearbeitet sind, wird die Palette auf einem anderen Stapelplatz abgelegt. Auf diese Weise werden nach und nach alle Paletten des Palettenstapels abgearbeitet und auf den zuvor bearbeiteten Paletten abgestapelt. Sobald dies geschehen ist, wird ein neuer Palettenstapel zugeführt, und der Palettenstapel mit den bearbeiteten Werkstücken abgeführt. Ein solches Handhabungssystem umfassend eine Handhabungsvorrichtung und ein Verfahren ist zum Beispiel aus der DE 31 51 316 C2 bekannt die als nächstliegender Stand der Technik angesehen wird. Dieses System weist jedoch den. Nachteil auf, daß der abgearbeitete Palettenstapel unverzüglich durch einen neuen ersetzt werden mußte, um längere Stillstandzeiten der Maschine zu vermeiden. Dies erfodert insbesondere bei manueller Zuführung der Palettenstapel, daß der betreffende Werker im entscheidenden Moment zum Stapelwechseln bereitsteht.

Ein insoweit verbessertes System ist aus der DE 44 09 532 C2 bekannt, bei dem der in Bearbeitung befindliche Palettenstapel auf einer Seite eines Drehtellers angeordnet ist. Der Werker hat während der gesamten Bearbeitungszeit des ersten Palettenstapels ausreichend Zeit, einen weiteren Palettenstapel auf der anderen Seite des Drehtellers zu plazieren.

Wenn es an den Austausch des fertig bearbeiteten gegen einen neuen Palettenstapel geht, braucht lediglich die Drehscheibe um 180° gedreht zu werden, und der Werker hat wiederum Zeit genug, einen neuen Palettenstapel auf dem Drehteller zu plazieren.

Das soeben beschriebene System ist allerdings insoweit nachteilhaft, als der Drehteller aufgrund seines Flugkreises relativ viel Platz einnimmt. Es wurde bereits eine Vorrichtung vorgeschlagen, die ohne den beschriebenen Drehteller auskommt. In diesem Falle wird der für den Werker erforderliche Zeitraum zum Auswechseln der Palettenstapel dadurch geschaffen, daß zwei Stapelbereiche nebeneinander vorgesehen sind. Sobald der erste Palettenstapel vollständig abgearbeitet ist, verfährt das Palettiergerät zum Zuführen der Paletten in den anderen Stapelbereich, um einen anderen Palettenstapel abzuarbeiten. In der Zeit, in der der andere Palettenstapel abgearbeitet wird, hat der Werker ausreichend Zeit, in den ersten Bereich einen neuen Palettenstapel einzubringen.

Alle genannten Systeme weisen jedoch eine Stillstandszeit in dem Moment auf, wenn ein Palettenstapel fertig bearbeitet ist und die Bearbeitung des nächsten Stapels begonnen wird. Bei dem System nach DE 31 51 316 C2 muß als Ersatz für den abgearbeiteten Stapel ein neuer Stapel zugeführt werden, bevor das nächste Werkstück dem Bearbeitungszentrum zugeführt werden kann. Dasselbe trifft auf die aus der DE 44 09 532 C2 bekannte Vorrichtung zu, wo dieses Auswechseln mit Hilfe eines Drehtellers erfolgt. Bei der vorgeschlagenen Vorrichtung ist zwar nicht das sofortige Zuführen eines frischen Palettenstapels erforderlich, statt dessen muß aber das Palettiergerät von dem einen Stapelbereich in den anderen Stapelbereich verfahren werden. Diese Systeme sind dann besonders nachteilhaft, wenn in dem nachgeordneten Bearbeitungszentrum verschiedene Bearbeitungsschritte mit verschiedenen Werkzeugmaschinen durchgeführt werden, so daß immer mehrere Werkstücke einer Palette gleichzeitig in Bearbeitung sind. So kann in dem Bearbeitungszentrum zum Beispiel noch eine Meßstation und/oder eine Reinigungsstation vorgesehen sein. In solchen Fällen muß abgewartet werden, bis die Maschine leergefahren ist, d.h. bis auch das letzte Werkstück alle Bearbeitungsstationen durchlaufen hat, in den letzten Werkstückträger zurückgelegt worden ist und die Palette auf dem abgearbeiteten Palettenstapel abgestapelt wird. Erst danach ist das Austauschen des Palettenstapels gegen einen frischen bzw. das Verfahren des Palettiergeräts möglich.

Aufgabe der Erfindung ist es daher, ein kompaktes Handhabungssystem der eingangs genannten Art vorzuschlagen, bei dem Stillstandszeiten beim Wechsel zwischen der Bearbeitung eines ersten Stapels und der Bearbeitung eines weiteren Stapels vermieden werden und ein Leerfahren des Bearbeitungszentrums vor dem Bearbeiten von Werkstücken des weiteren Stapels nicht notwendig ist.

Die Aufgabe wird gelöst durch eine Handhabungsvorrichtung zum Zuführen von Werkstücken oder Werkstückträgern zu einer nachgeordneten Bearbeitungseinrichtung, mit zwei oder mehr Bereitstellungsvorrichtungen, die jeweils einen ersten und einen zweiten Stapelbereich aufweisen und geeignet sind, einen Werkstückträger von einem Werkstückträgerstapel aus dem zugehörigen ersten Stapelbereich aufzunehmen, in eine Zuführposition zu bewegen, in dem zugehörigen zweiten Stapelbereich abzustapeln und wieder zurückzustapeln in den ersten Stapelbereich, wobei der erste Stapelbereich zur Zuführung und zur Entnahme von Werkstückträgerstapeln ausgebildet ist, und mit einer Ladevorrichtung, die geeignet ist, ein Werkstück aus dem Werkstückträger oder den gesamten Werkstückträger in der Zuführposition zu ergreifen und der nachgeordneten Bearbeitungsstation zuzuführen, wobei die Ladevorrichtung die Zuführpositionen der zwei oder der mehreren Bereitstellungsvorrichtungen bedienen kann.

Auf diese Weise wird die Notwendigkeit des Leerfahrens des Bearbeitungszentrums beim Wechsel des fertig bearbeiteten Palettenstapels gegen einen neuen Stapel vermieden. Denn während die Ladevorrichtung noch die letzten bearbeiteten Werkstücke in den in Zuführposition befindlichen Werkstückträger der ersten Bereitstellungsvorrichtung zurücklegt, kann sie bereits Werkstücke aus dem ebenfalls in Zuführposition gebrachten Werkstückträger der zweiten Bereitstellungsvorrichtung entnehmen und dem Bearbeitungszentrum zuführen. Dieser Zeitgewinn ist umso vorteilhafter, je mehr Werkstücke in dem Bearbeitungszentrum gleichzeitig bearbeitet werden. Ein Vermischen der Werkstücke derart, daß die von einem Werkstückträger des ersten Werkstückträgerstapels entnommenen Werkstücke auf einem Werkstückträger des zweiten Werkstückträgerstapels abgelegt werden, was bei den bekannten Vorrichtungen denkbar wäre, um die Stillstandszeiten nur auf das Auswechseln der Palettenstapel zu beschränken kann hier vollständig vermieden werden. Dies ist dann inbesondere vorteilhaft, wenn die einzelnen Werkstückträgerstapel unterschiedliche Aufträge oder Chargen betreffen, so daß Vermischungen der Stapelinhalte nicht hingenommen werden können.

Gemäß einer vorteilhaften Ausgestaltung der Erfindung ist vorgesehen, daß die Bereitstellungsvorrichtungen derart nebeneinander angeordnet sind, daß ihre jeweiligen Zuführpositionen und die Zuführrichtung der Ladevorrichtung in einer gemeinsamen Ebene liegen. Dadurch wird es möglich, daß die Ladevorrichtung nur eine translatorische Achse in horizontaler Richtung und eine in senkrechter Richtung benötigt. Zum Beispiel kann die Ladevorrichtung in Portalbauweise senkrecht über den beiden Zuführpositionen der Bereitstellungsvorrichtungen angeordnet sein.

Um eine kompakte Bauweise zu gewährleisten, die den Sicherheitsanforderungen entspricht, ist in weiter vorteilhafter Ausgestaltung vorgesehen, daß die Handhabungsvorrichtung als rundherum geschlossene Zelle ausgebildet ist mit jeweils einer Zugangstür zu dem ersten Stapelbereich einer Bereitstellungsvorrichtung, jeweils einer oben offenen Trennwand zwischen dem ersten und zweiten Stapelbereich der Bereitstellungsvorrichtungen und einer Zwischenwand zwischen den ersten Stapelbereichen der Bereitstellungsvorrichtungen. Dadurch wird gewährleistet, daß der Werker bei geöffneter Zugangstür nur Zugang zu dem auszuwechselnden Palettenstapel im ersten Stapelbereich hat, während der Zugang zu den anderen Stapelbereichen durch die Wände wirksam verhindert wird.

Um darüber hinaus zu gewährleisten, daß der Werker beim Austauschen der Palettenstapel nicht aus dem ersten Stapelbereich über die oben offene Trennwand hinweg in den Arbeitsraum des zweiten Stapelbereichs hineingreifen kann, ist in weiter vorteilhafter Ausgestaltung der Erfindung vorgesehen, daß jede Bereitstellungsvorrichtung eine Schutzplatte aufweist, die in einer definierten Position der Bereitstellungsvorrichtung den offenen Bereich über der oben offenen Trennwand abschließt, so daß der erste Stapelbereich beim Austausch des darin befindlichen Palettenstapels rundherum abgeschlossen ist.

Als weitere vorteilhafte Ausgestaltung ist vorgesehen, daß die Zugangstüren jeweils einen Verriegelungsmechanismus aufweisen, der nur entriegelbar ist, wenn die Bereitstellungsvorrichtung in der genannten definierten Position ist. Dadurch wird verhindert, daß der Werker in den Arbeitsraum gelangen kann, während noch ein Arbeitsprozeß stattfindet. Insbesondere kann er nicht beim Umstapeln der Paletten in den Raum gelangen. Die Zugangstüren können natürlich auch in bekannter Weise durch Schutzgittertürschalter gesichert sein, die beim Öffnen der Türen die Anlage stillsetzen.

Die Erfindung sieht weiter vorteilhaft vor, daß die Handhabungsvorrichtung eine Schleuseneinrichtung zum Einschleusen von Werkstücken in eine Zuführposition aufweist. Aufgrund der erfindungsgemäßen Vorrichtung ist es erstmals möglich, daß ein abgearbeiteter Palettenstapel noch einige Zeit in dem Arbeitsraum verbleibt und mit der zugeordneten Bereitstellungsvorrichtung bedienbar bleibt, so daß Fehlwerkstücke, die ersetzt werden müssen, eingeschleust werden und in den an sich bereits abgearbeiteten Palettenstapel einsortiert werden können, während an sich bereits der andere Palettenstapel in Bearbeitung ist.

Eine weiter vorteilhafte Ausgestaltung der Erfindung sieht vor, daß unter den Stapelbereichen einer jeden Bereitstellungsvorrichtung eine Ölwanne vorgesehen ist, die in den jeweils ersten Stapelbereichen eine Aussparung aufweist, welche etwa der Fläche der zu bearbeitenden Werkstückträgerstapel entspricht. Dies ist vorteilhaft für solche Systeme, bei denen die Werkstückträgerstapel auf Rollenwagen angefahren werden, die ihrerseits eine Ölwanne besitzen. Die Transportwagen stehen daher nicht in oder auf der Ölwanne sondern auf einem festen Untergrund und dennoch ist die Fläche unterhalb des Arbeitsraumes vollständig gegen abtropfende Flüssigkeiten geschützt.

Schließlich ist es vorteilhaft, wenn die Bereitstellungsvorrichtung in Umstapelrichtung seitlich an den umzustapelnden Werkstückträgern angreift und diese über die Trennwand hinüberhebt. Im Gegensatz zu der vorgeschlagenen Umstapelzelle kann auf diese Weise auf ein Verschieben der Trennwand vor dem Beginn des Umstapelns verzichtet werden, da die Bereitstellungsvorrichtung mit der Trennwand nicht kollidieren kann.

Die der Erfindung zugrundeliegende Aufgabe wird darüber hinaus durch ein Verfahren zum Zuführen von Werkstücken oder Werkstückträgern zu einer Bearbeitungseinrichtung gelöst, das die folgenden Schritte umfaßt:
(a) Aufnehmen eines Werkstückträgers von einem Werkstückträgerstapel in einem ersten Stapelbereich einer ersten Bereitstellungsvorrichtung,
(b) Bewegen des Werkstückträgers in eine Zuführposition,
(c) Ergreifen eines Werkstücks aus dem Werkstückträger oder des gesamten Werkstückträgers mittels einer Ladevorrichtung aus der Zuführposition,
(d) Zuführen des Werkstücks bzw. Werkstückträgers zu der nachgeordneten Bearbeitungseinrichtung, mittels der Ladevorrichtung und Zurückführen des Werkstücks bzw. Werkstückträgers nach der Bearbeitung,
(e) Abstellen des Werkstückträgers in einem zweiten Stapelbereich der Bearbeitungsvorrichtung und Wiederholen der Schritte (a) bis (c), bis kein Werkstückträger mehr im ersten Stapelbereich der Bearbeitungsvorrichtung vorhanden ist,
(f) Entfernen des Werkstückträgerstapels und Einführen eines neuen Werkstückträgerstapels,
(g) bevor kein unbearbeitetes Werkstück bzw. Werkstückträger mehr gemäß Schritt (c) in der Zuführposition ergriffen werden kann, Durchführen der Schritte (a) und (b) bezogen auf einen Werkstückträgerstapel in einem ersten Stapelbereich einer weiteren Bereitstellungsvorrichtung, und
(h) spätestens wenn kein unbearbeitetes Werkstück bzw. Werkstückträger mehr gemäß Schritt (c) in der Zuführposition ergriffen werden kann, Durchführen der Schritte (c) bis (h) bezogen auf den Werkstückträgerstapel in dem ersten Stapelbereich der weiteren Bereitstellungsvorrichtung.

Vor dem Verfahrensschritt (f) können die Werkstückträger auch zunächst aus dem zweiten Stapelbereich der Bereitstellungsvorrichtung in den ersten Stapelbereich der Bereitstellungsvorrichtung zurückgestapelt werden, was üblicherweise der Fall ist.

Gemäß einer vorteilhaften Ausführung dieses Verfahrens ist vorgesehen, daß die Schritte (b) bis (d) auch beim Zurückstapeln durchgeführt werden. So kann bei dem Hinstapeln eine Teilmenge der Werkstücke bearbeitet werden, die sich in dem Werkstückträger befinden, und bei dem Zurückstapeln können die restlichen Werkstücke bearbeitet werden, so daß kein Zeitverlust beim Zurückstapeln entsteht.

Eine andere Ausführung des erfindungsgemäßen Verfahrens sieht vor, daß die Schritte (b) bis (d) nur beim Zurückstapeln durchgeführt werden. Die Werkstücke werden in diesem Falle nicht beim Hinstapeln sondern erst beim Zurückstapeln der Bearbeitungseinrichtung zugeführt.

Gemäß einer weiteren Ausführung der Erfindung ist es möglich, daß das Zurückführen eines oder mehrerer Werkstücke bzw. Werkstückträger nach der Bearbeitung gemäß Schritt (d) in die Zuführposition der anderen Bereitstellungsvorrichtung erfolgt. Auf diese Weise werden zwar die Chargen eines Werkzeugträgerstapels mit denen eines anderen Werkzeugträgerstapels vermischt. Dies ist aber bei identischen Chargen kein Problem und gestattet es daher, daß beim Wechseln der Werkstückträgerstapel die letzten Werkstücke des einen Werkstückträgerstapels in dem anderen Werkstückträgerstapel abgelegt werden können, wenn diesem ein unbearbeitetes Werkstück entnommen worden ist. Dies minimiert zumindest den Programmieraufwand, da immer nur ein bearbeitetes Werkstück gegen ein unbearbeitetes Werkstück ausgetauscht wird.

Nachfolgend wird die vorliegende Erfindung beispielhaft an einer besonderen Ausführungsform beschrieben.
Fig. 1 zeigt die erfindungsgemäße Handhabungsvorrichtung schematisch von oben;
Fig. 2 zeigt die in Fig. 1 dargestellte Handhabungsvorrichtung als Seitenansicht gemäß dem Schnitt I-I, bei der die Bereitstellungsvorrichtung 13 in einer anderen Position dargestellt ist; und
Fig. 3 zeigt eine schematische Seitenansicht der in Fig. 1 dargestellten Handhabungsvorrichtung von rechts.

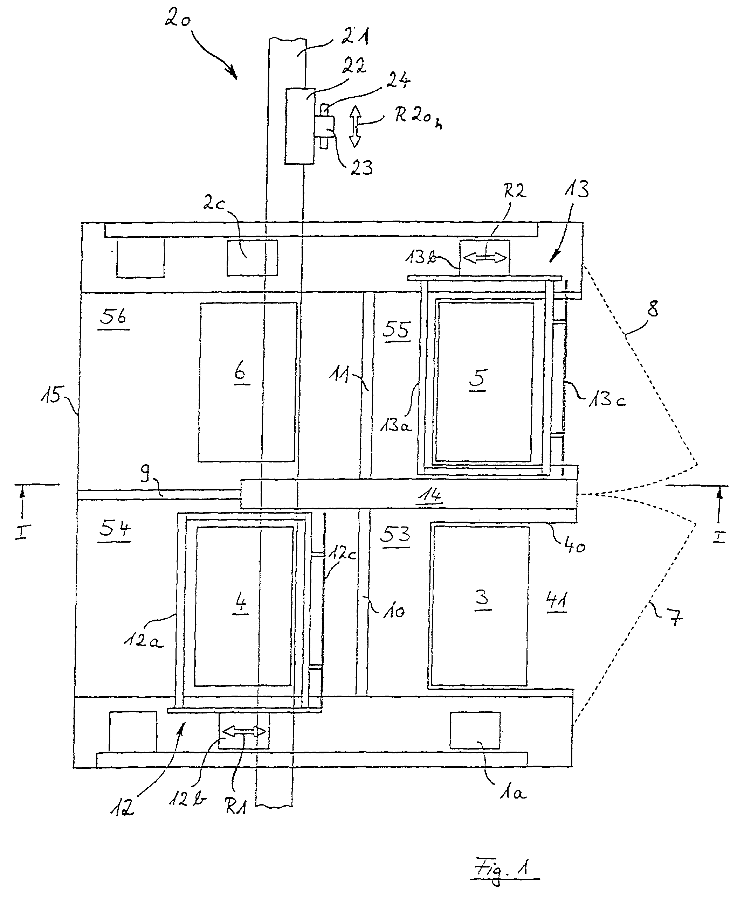

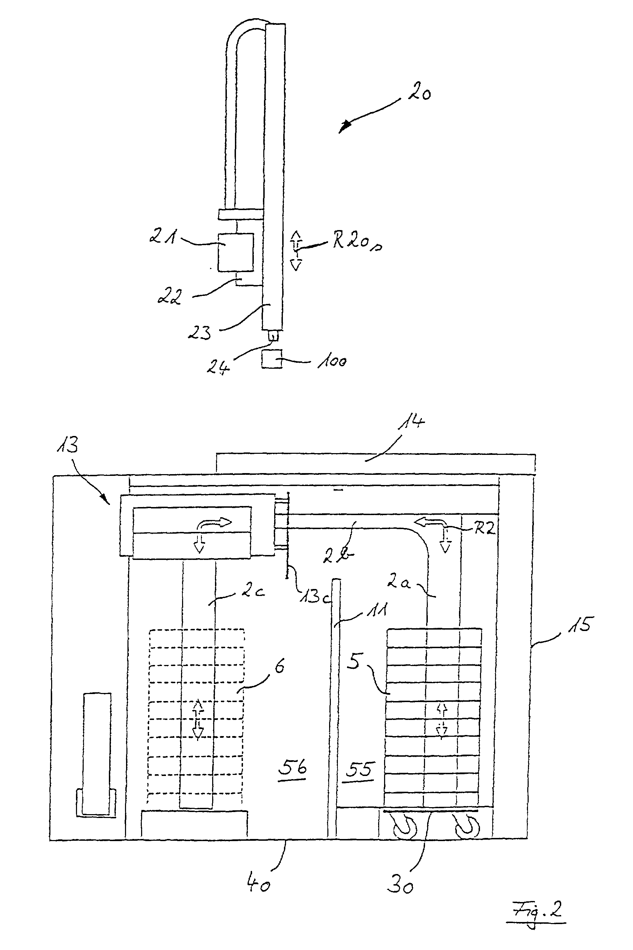

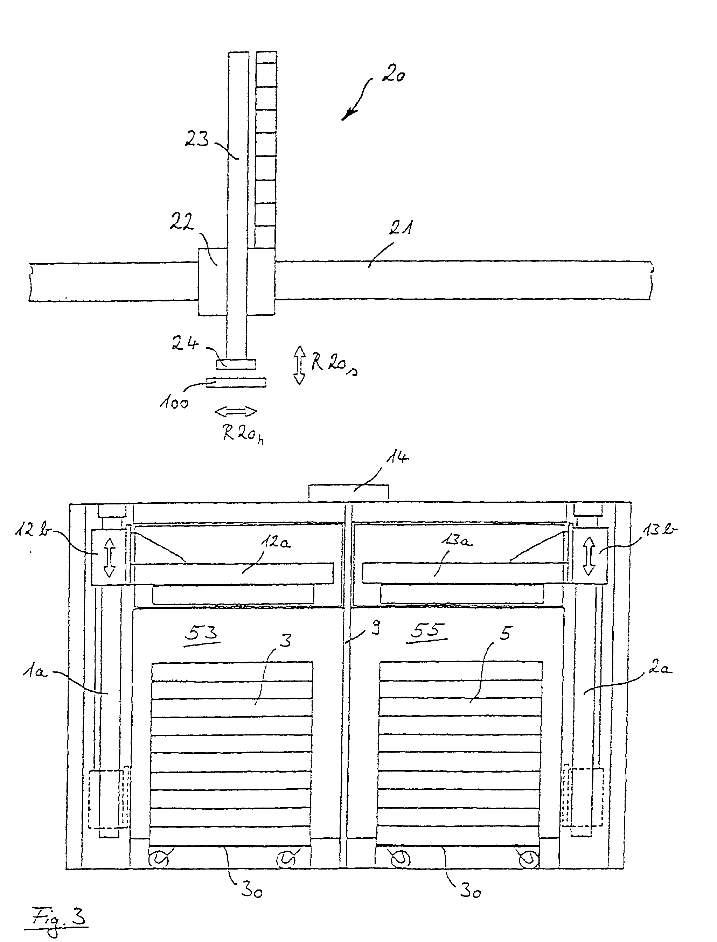

Bezugnehmend auf Fig. 1, umfaßt die Handhabungsvorrichtung eine äußere Schutzwand 15, die einen Raum umschließt, welcher durch die beiden Zugangstüren 7 und 8 zugänglich ist. Durch die Zugangstüren 7 und 8 werden Werkstückträgerstapel 3, 5 dem Arbeitsraum zugeführt. Dies erfolgt auf Rollenwagen 30 (siehe Fig. 2 und 3), die in eine Aussparung 41 einer Bodenwanne 40 in definierter Position abgestellt werden. Die Bodenwanne 40 erstreckt sich im übrigen unter dem gesamten, von der äußeren Schutzwand 15 abgegrenzten Arbeitsraum, um die von den Werkstücken abtropfende Flüssigkeit aufzufangen. In entsprechender Weise besitzen auch die Rollenwagen 30 eine eigene Ölwanne, die mit der Bodenwanne 40 flächendeckend abschließt. Insgesamt ergibt sich eine geschlossene Zelle.

Der Arbeitsbereich ist durch die Trennwände 10 und 11 sowie die durchgehende Zwischenwand 9 in vier Stapelbereiche 53 bis 56 unterteilt. Mit Hilfe einer ersten Bereitstellungsvorrichtung 12 kann der Werkstückträgerstapel 3 zwischen einem ersten Stapelbereich 53 und einem zweiten Stapelbereich 54 umgestapelt werden. Entsprechend kann mit einer zweiten Bereitstellungsvorrichtung 13 der Werkstückträgerstapel 5 zwischen einem ersten Stapelbereich 55 und einem zweiten Stapelbereich 56 umgestapelt werden. Beiden Bereitstellungsvorrichtungen 12, 13 ist somit jeweils ein erster und ein zweiter Stapelbereich 53 und 54 bzw. 55 und 56 zugeordnet. Die Werkstückträgerstapel 3 bzw. 5 können somit aufgrund der beiden voneinander unabhängigen Bereitstellungsvorrichtungen 12 und 13 unabhängig voneinander in die jeweils zweiten Stapelbereiche 54 bzw. 56 umgestapelt werden und bilden dort die Werkstückträgerstapel 4 bzw. 6.

Die Bereitstellungsvorrichtungen 12 und 13 weisen jeweils einen Greifer 12a bzw. 13a auf, der an einem Schlitten 12b bzw. 13b entlang einer definierten Bahn R2 entlangbewegt werden kann. Wie besonders gut in Fig. 2 anhand der zweiten Bereitstellungsvorrichtung 13 zu sehen ist, ist diese Bahn in drei Abschnitte 2a, 2b und 2c unterteilt. Danach wird ein Werkstückträger aus dem ersten Stapelbereich 55 von dem Stapel 5 entlang der senkrechten Führung 2a bis auf die Höhe der waagerechten Führung 2b angehoben, dann entlang der waagerechten Führung 2b von dem ersten Stapelbereich 55 in den zweiten Stapelbereich 56 bewegt und schließlich entlang der senkrechten Führung 2c auf den Werkstückträgerstapel 6 abgesenkt. Entsprechend wird die erste Bereitstellungsvorrichtung 12 entlang einer solchen Führungsbahn 1a - 1c bewegt, wobei es unerheblich ist, ob die Führungen spiegelsymmetrisch einander gegenüberliegend angeordnet sind, wie in Fig. 1 dargestellt, oder ob sich zum Beispiel eine oder beide Führungen mit der zugehörigen Bereitstellungsvorrichtung an der Zwischenwand 9 befinden.

Die beiden Bereitstellungsvorrichtungen 12 und 13 weisen jeweils eine Schutzplatte 12c bzw. 13c auf, die, wie besonders anschaulich in Fig. 2 zu sehen ist, in einer bestimmten Position der Bereitstellungsvorrichtung 12 bzw. 13 die oben offene Trennwand 10 bzw. 11 nach oben zur Decke hin abschließt. Die Bereitstellungsvorrichtung 12 bzw. 13 wird in diese definierte Position verfahren, wenn ein fertig bearbeiteter Werkstückträgerstapel 3 bzw. 5 gegen einen neuen Werkstückträgerstapel 3 bzw. 5 ausgetauscht wird. Der Werker, der die Stapel 3 bzw. 5 gegeneinander austauscht, ist aufgrund der von der Schutzplatte 12c bzw. 13c eingenommenen Position vollständig von den übrigen Stapelbereichen 54, 55, 56 bzw. 53, 54, 56 abgeschirmt, so daß die Handhabungsvorrichtung während dieser Zeit für den Verkehr gefahrlos weiterarbeiten kann. Diese Position könnte auch durch Endschalter überwacht werden.

Die jeweils zweiten Stapelbereiche 54 bzw. 56 werden von einem Portal 21 überspannt, an dem eine Ladevorrichtung 20 beweglich angeordnet ist. Die Ladevorrichtung 20 umfaßt einen Schlitten 22, der in Richtung R20ₕ horizontal entlang dem Portal 21 beweglich ist. Desweiteren umfaßt die Ladevorrichtung 20 eine Säule 23, die entlang dem Schlitten 22 in Richtung R20ₛ senkrecht verfahrbar ist (siehe Fig. 3). An der Säule 23 befindet sich ein Greifer 24, mit dem ein in der Zuführposition befindliches Werkstück 100 ergriffen werden kann. Diese Art von Ladevorrichtung 20 ist an sich bekannt. Gemäß dieser Ausführungsform kommt die Ladevorrichtung 20 mit einer einzigen horizontalen Verfahrrichtung R20ₕ für den Schlitten 22 aus, da über das Portal 21 die jeweiligen Zuführpositionen beider Bereitstellungsvorrichtungen 12 bzw. 13 mit der Ladevorrichtung 20 erreichbar sind.

Zusätzlich zu den bisher beschriebenen Elementen der Handhabungsvorrichtung ist eine Schleuseneinrichtung 14 vorgesehen, mit der Werkstücke von außen in den Prozeß in eine Zuführposition eingeschleust werden können. Aus der Zuführposition können diese eingeschleusten Werkstücke mittels der Ladevorrichtung 20 ergriffen werden.

Die zuvor beschriebene Handhabungsvorrichtung funktioniert beispielsweise folgendermaßen. Werkstückträgerstapel 3 und 5 werden auf Rollwagen 30 in die entsprechenden Stapelbereiche 53 bzw. 55 gebracht, während die Bereitstellungsvorrichtungen 12 bzw. 13 derart positioniert sind, daß ihre Schutzplatten 12c bzw. 13c die zugehörigen Trennwände 10 bzw. 11 nach oben hin abschließen. Sobald die Zugangstüren 7 bzw. 8 geschlossen sind, können die Bereitstellungsvorrichtungen 12 bzw. 13 mit dem Umstapelvorgang beginnen. Aus Sicherheitsgründen kann eine Bereitstellungsvorrichtung 12 bzw. 13 so lange nicht arbeiten, wie die Zugangstür des zugehörigen ersten Stapelbereichs 53 bzw. 55 nicht verriegelt ist.

Die zweite Bereitstellungsvorrichtung 13 beginnt sodann mit dem Ümstapelvorgang, indem der oberste Werkstückträger von dem Werkstückträgerstapel 5 entlang der senkrechten Führung 2a angehoben wird und entlang der horizontalen Führung 2b in eine Position unterhalb der Ladevorrichtung 20 verfahren wird, so daß die Ladevorrichtung 20 mittels dem Greifer 24 ein Werkstück 100 aus dem Werkstückträger entnehmen und einer nachgeordneten Bearbeitungseinrichtung zuführen kann. Die Bereitstellungsvorrichtung 13 wird in ihrer horizontalen Position derart getaktet, daß die Ladevorrichtung 20 nach und nach alle Werkstücke aus dem Werkstückträger entnehmen, der Bearbeitungsstation zuführen und die bearbeiteten Werkstücke zurückführen und im Werkstückträger wieder ablegen kann. Sobald ein Werkstückträger vollständig mit bearbeiteten Werkstücken gefüllt ist, wird dieser Werkstückträger entlang der senkrechten Führung 2c in dem zweiten Stapelbereich 56 auf einem zweiten Werkstückträgerstapel 6 abgestapelt. Dieser Vorgang wird mit den übrigen Werkstückträgern des Werkstückträgerstapels 5 wiederholt, bis der letzte Werkstückträger vollständig abgearbeitet ist. Anschließend werden die Werkstückträger wieder aus dem zweiten Stapelbereich 56 in den ersten Stapelbereich 54 zurückgestapelt und können gegen einen neuen Werkstückträgerstapel 6 ausgetauscht werden.

Es ist auch denkbar, daß der Werkstückträgerstapel 6 nicht zurückgestapelt wird, sondern in dem zweiten Stapelbereich 56 auf einen Rollwagen gestapelt und dem zweiten Stapelbereich 56 direkt entnommen wird. Außerdem ist denkbar, daß der Werkstückträgerstapel 6 zunächst aus dem ersten Stapelbereich 55 in den zweiten Stapelbereich 56 gestapelt wird und erst beim Zurückstapeln in den ersten Stapelbereich 55 wie oben beschrieben in getakteter Weise abgearbeitet wird. Weiterhin ist denkbar, daß ein Teil der Werkstücke aus einem Werkstückträger beim Hinstapeln aus dem ersten Stapelbereich 55 in den zweiten Stapelbereich 56 abgearbeitet werden, während die übrigen Werkstücke aus demselben Werkstückträger erst beim Zurückstapeln abgearbeitet werden. Schließlich ist denkbar, daß statt der Entnahme nur einzelner Werkstücke aus dem Werkstückträger auch der gesamte Werkstückträger mittels der Ladevorrichtung 20 einer Bearbeitungsstation zugeführt wird, zum Beispiel einer Waschmaschine.

Um nun zu verhindern, daß unnötige Stillstandszeiten beim Auswechseln der fertig bearbeiteten Werkstückträgerstapel 3, 5 auftreten, ist nach dem erfindungsgemäßen Verfahren vorgesehen, daß während der Bearbeitung des Werkstückträgerstapels 5 durch die zweite Bereitstellungsvorrichtung 13 bereits der oberste Werkstückträger von dem Werkstückträgerstapel 3 mittels der ersten Bereitstellungsvorrichtung 12 entlang der zugehörigen Führungen 1a - 1c in eine Zuführposition gebracht wird, aus der ein Werkstück oder der gesamte Werkstückträger von der Ladevorrichtung 20 entnommen werden kann. In dem Moment, in dem die Ladevorrichtung 20 das letzte Werkstück bzw. den letzten Werkstückträger zur zweiten Bereitstellungsvorrichtung 13 zurückgeführt hat, kann unmittelbar danach bereits ein neues Werkstück bzw. ein neuer Werkstückträger von der in Zuführposition befindlichen ersten Bereitstellungsvorrichtung 12 mittels der Ladevorrichtung 20 entnommen und der nachgeordneten Bearbeitungsstation zugeführt werden.

Es sind Fälle denkbar, in denen das letzte bearbeitete Werkstück eines Werkstückträgers gegen ein unbearbeitetes ausgetauscht, das unbearbeitete Werkstück der nachgeordneten Bearbeitungsstation zugeführt und bearbeitet und dann von der Ladevorrichtung 20 wieder zurückgeführt worden ist, um es gegen ein unbearbeitetes Werkstück des nachfolgenden Werkstückträgers auszutauschen, noch bevor der nachfolgende Werkstückträger mittels der Bereitstellungsvorrichtung 12 oder 13 in Zuführposition gebracht werden konnte. In diesen Fällen, die bei den herkömmlichen Vorrichtungen zu Stillstandszeiten geführt hätten, ist es möglich, daß das "zu früh" zurückgeführte bearbeitete Werkstück gegen ein unbearbeitetes Werkstück aus einem von der anderen Bereitstellungsvorrichtung 13 bzw. 12 bereitgestellten Werkstückträgers ausgewechselt wird. Dies ist insbesondere bei mehreren Werkstückträgerstapeln 3, 5 der gleichen Charge möglich und führt zu weiterer Verringerung der Stillstandszeiten. Daher kann es wichtig sein, daß die Bereitstellungsvorrichtung 13 bzw. 12, deren Werkstückträgerstapel 5 bzw. 3 zur Zeit nicht abgearbeitet wird, so bald als möglich den ersten Werkstückträger in eine Zuführposition bewegt, so daß die Ladevorrichtung 20 im Bedarfsfall auf diesen Werkstückträger zugreifen kann. Spätestens aber muß der Werkstückträger dann in Zuführposition gebracht sein, wenn kein unbearbeitetes Werkstück mehr von dem Werkstückträger der entsprechenden anderen Bereitstellungsvorrichtung 12 bzw. 13 mittels der Ladevorrichtung 20 entnommen werden kann, weil z.B. bereits alle Werkstücke dieses Werkstückträgers abgearbeitet sind.

Eine besondere Zeitersparnis gegenüber den früheren Systemen ergibt sich dann, wenn ein Vermischen der Werkstückträgerstapelinhalte nicht erlaubt ist, das heißt, wenn die Werkstücke unbedingt in den gleichen Werkstückträgerstapel 12 bzw. 13 zurückgelegt werden müssen, aus dem sie entnommen wurden. Wenn zum Beispiel das erste von mehreren Werkstücken, die alle demselben Werkstückträger, der der letzte Träger eines Stapels beim Zurückstapeln ist, entnommen und gleichzeitig bearbeitet wurden, von der Ladevorrichtung 20 in den entsprechenden Werkstückträger zurückgeführt wird, ohne daß die Ladevorrichtung 20 aus diesem Werkstückträger ein weiteres unbearbeitetes Werkstück entnehmen könnte, kann die Ladevorrichtung 20 bereits von dem in Zuführposition befindlichen Werkstückträger der anderen Bereitstellungsvorrichtung 13 bzw. 12 ein unbearbeitetes Werkstück entnehmen, und der nachgeordneten Bearbeitungsstation zuführen. Dies erfolgt so oft, bis der betreffende Werkstückträger mit den übrigen, bearbeiteten Werkstücken vollständig gefüllt ist. Ein Leerfahren der Bearbeitungseinrichtung, bevor die Bearbeitung der Werkstücke eines anderen Werkstückträgers beginnt, wird dadurch entbehrlich. Der zuletzt bearbeitete Werkstückträgerstapel 5 oder 3 wird demnach erst aus der Handhabungsvorrichtung entnommen, wenn alle bearbeiteten Werkstücke zurückgeführt worden sind. Währenddessen hat längst die Bearbeitung eines anderen Werkstückträgerstapels 3 bzw. 5 begonnen.

Darüber hinaus ist es mittels der Schleuseneinrichtung 14 möglich, Ausschußteile zu ersetzen, ohne daß eine Zeitverzögerung eintreten würde. Während zum Beispiel die Werkstückträgerstapel 3 bzw. 4 mittels der ersten Bereitstellungsvorrichtung 12 planmäßig abgearbeitet werden, kann die zweite Bereitstellungsvorrichtung 13 nacheinander diejenigen Werkstückträger in eine Zuführposition bringen, in denen Freiplätze aufzufüllen sind. Die Ladevorrichtung 20 nimmt dazu zunächst die aus der Einschleuseinrichtung 14 eingeschleusten Rohteile auf, führt sie dem nachgeordneten Bearbeitungszentrum zu und führt anschließend das entsprechende Fertigteil in den in Zuführposition befmdlichen Freiplatz zurück. Auf diese Weise kann ein Werkstückträgerstapel 5 bzw. 6 mittels der Bereitstellungsvorrichtung 13 vollständig aufgefüllt werden, während bereits ein anderer Werkstückträgerstapel 3 bzw. 4 mittels der Bereitstellungsvorrichtung 12 in Bearbeitung ist.

Schließlich bietet die erfindungsgemäße Vorrichtung noch den Vorteil, daß im Falle des Ausfalls einer Bereitstellungsvorrichtung 12 oder 13 ein Notfahrplan mit der verbleibenden Bereitstellungsvorrichtung 13 bzw. 12 gefahren werden kann. Auch dies wirkt sich dahingehend aus, daß Stillstandszeiten vermieden werden.

## Patentansprüche

1. Handhabungsvorrichtung zum Zuführen von Werkstücken oder Werkstückträgern zu einer nachgeordneten Bearbeitungseinrichtung, mit zwei oder mehr Bereitstellungsvorrichtungen (12, 13), die jeweils einen ersten und einen zweiten Stapelbereich (53 bzw. 55 und 54 bzw. 56) aufweisen und geeignet sind, einen Werkstückträger von einem Werkstückträgerstapel (3 bzw. 4) aus dem zugehörigen ersten Stapelbereich (53 bzw. 55) aufzunehmen, in eine Zuführposition zu bewegen, in dem zugehörigen zweiten Stapelbereich (54 bzw. 56) abzustapeln und wieder zurückzustapeln in den ersten Stapelbereich (53 bzw. 55), wobei der erste Stapelbereich (53 bzw. 55) zur Zuführung und zur Entnahme von Werstückträgerstapeln (3 bzw. 5) ausgebildet ist, und mit einer Ladevorrichtung (20), die geeignet ist, ein Werkstück aus dem Werkstückträger oder den gesamten Werkstückträger in der Zuführposition zu ergreifen und der nachgeordneten Bearbeitungsstation zuzuführen, wobei die Ladevorrichtung (20) die Zuführpositionen der zwei oder der mehreren Bereitstellungsvorrichtungen (12, 13) bedienen kann.

2. Handhabungsvorrichtung nach Anspruch 1, **dadurch gekennzeichnet, daß** die zwei oder mehr Bereitstellungsvorrichtungen (12, 13) nebeneinander angeordnet sind, und ihre jeweiligen Zuführpositionen in einer gemeinsamen Ebene liegen.

3. Handhabungsvorrichtung nach Anspruch 1 oder Anspruch 2, **dadurch gekennzeichnet, daß** die Handhabungsvorrichtung als rundherum geschlossene Zelle ausgebildet ist mit jeweils einer Zugangstür (7 bzw. 8) zu dem ersten Stapelbereich (53 bzw. 55) einer Bereitstellungsvorrichtung (12 bzw. 13), jeweils einer oben offenen Trennwand (10 bzw. 11) zwischen dem ersten Stapelbereich (53 bzw. 55) und zweiten Stapelbereich (54 bzw. 56) der Bereitstellungsvorrichtungen (12 bzw. 13), und einer Zwischenwand (9) zwischen den ersten Stapelbereichen (53, 55) der Bereitstellungsvorrichtungen (12, 13).

4. Handhabungsvorrichtung nach Anspruch 3, **dadurch gekennzeichnet, daß** die Bereitstellungsvorrichtungen (12, 13) jeweils eine Schutzplatte (12c bzw. 13c) aufweisen, die in einer definierten Position der jeweiligen Bereitstellungsvorrichtung (12 bzw. 13) den offenen Bereich über der oben offenen Trennwand (10 bzw. 11) abschließt, so daß der erste Stapelbereich (53 bzw. 55) rundherum abgeschlossen ist.

5. Handhabungsvorrichtung nach Anspruch 4, **dadurch gekennzeichnet, daß** die Zugangstüren (7, 8) jeweils einen Verriegelungsmechanismus aufweisen, der entriegelbar ist, wenn die Bereitstellungsvorrichtung (12 bzw. 13) in der definierten Position ist.

6. Handhabungsvorrichtung nach einem der vorhergehenden Ansprüche, **dadurch gekennzeichnet, daß** sie eine Schleuseneinrichtung (14) zum Ein- oder Ausschleusen von Werkstücken in eine oder aus einer Zuführposition aufweist.

7. Handhabungsvorrichtung nach einem der vorhergehenden Ansprüche, **dadurch gekennzeichnet, daß** unter den Stapelbereichen (53, 55) einer jeden Bereitstellungsvorrichtung (12 bzw. 13) eine Ölwanne vorgesehen ist, die in den jeweils ersten Stapelbereichen eine Aussparung (41) aufweist, die etwa der Fläche der zu bearbeitenden Werkzeugträgerstapel (3 bzw. 5) entspricht.

8. Handhabungsvorrichtung nach einem der vorhergehenden Ansprüche, **dadurch gekennzeichnet, daß** die Bereitstellungsvorrichtung (12, 13) seitlich an den umzustapelnden Werkstückträgern angreift und diese über die Trennwand (10 bzw. 11) hinüberhebt.

9. Verfahren zum Zuführen von Werkstücken oder Werkstückträgern zu einer Bearbeitungseinrichtung, umfassend die folgenden Schritte:
(a) Aufnehmen eines Werkstückträgers von einem Werkstückträgerstapel (3) in einem ersten Stapelbereich (53) einer ersten Bereitstellungsvorrichtung (12),
(b) Bewegen des Werkstückträgers in eine Zuführposition,
(c) Ergreifen eines Werkstücks aus dem Werkstückträgers oder des gesamten Werkstückträgers mittels einer Ladevorrichtung (20) aus der Zuführposition,
(d) Zuführen des Werkstücks bzw. Werkstückträgers zu der nachgeordneten Bearbeitungseinrichtung mittels der Ladevorrichtung (20) und Zurückführen des Werkstücks bzw. Werstückträgers nach der Bearbeitung,
(e) Abstellen des Werkstückträgers in einem zweiten Stapelbereich (54) der Bereitstellungsvorrichtung (12) und Wiederholen der Schritte (a) - (e), bis keine Werkstückträger mehr im ersten Stapelbereich (53) der Bereitstellungsvorrichtung (12) vorhanden sind,
(f) Entfernen des Werkstückträgerstapels (4) und Einführen eines neuen Werkstückträgerstapels (3) in den ersten Stapelbereich (53),
(g) bevor kein unbearbeitetes Werkstück bzw. Werkstückträger mehr gemäß Schritt (c) in der Zuführposition ergriffen werden kann, Aufnehmen eines Werkstückträgers von einem Werkstückträgerstapel (5) in einem ersten Stapelbereich (55) einer weiteren Bereitstellungsvorrichtung (13) und Bewegen des Werkstückträgers in eine weitere Zuführposition, und
(h) spätestens wenn kein unbearbeitetes Werkstück bzw. Werkstückträger mehr gemäß Schritt (c) in der Zuführposition ergriffen werden kann, Durchführen der Schritte (c) - (h) bezogen auf den Werkstückträgerstapel (5) in dem ersten Stapelbereich (55)der weiteren Bereitstellungsvorrichtung (13).

10. Verfahren nach Anspruch 9, bei dem vor dem Schritt (f) die Werkstückträger aus dem zweiten Stapelbereich (54 bzw. 56) der Bereitstellungsvorrichtung (12 bzw. 13) in den ersten Stapelbereich (53 bzw. 55) der Bereitstellungsvorrichtung (12 bzw. 13) zurückgestapelt werden.

11. Verfahren nach Anspruch 10, bei dem die Schritte (b) - (d) auch beim Zurückstapeln durchgeführt werden.

12. Verfahren nach Anspruch 10, bei dem die Schritte (b) - (d) nur beim Zurückstapeln durchgeführt werden.

13. Verfahren nach einem der Ansprüche 9 bis 12, **dadurch gekennzeichnet, daß** das Zurückführen eines oder mehrerer Werkstücke bzw. Werkstückträger nach der Bearbeitung gemäß Schritt (d) in die Zuführposition der anderen Bereitstellungsvorrichtung erfolgt.

## Claims

1. A handling apparatus for feeding workpieces or workpiece carriers to a downstream processing device, having two or more pick-up apparatuses (12, 13) each having first and second stacking areas (53, 55 and 54, 56) and being suitable for picking up a workpiece carrier from a workpiece carrier stack (3, 4) from the associated first stacking area (53, 55), moving it to a feed position, stacking it in the associated second stacking area (54, 56), and restacking it to the first stacking area (53, 55), the first stacking area (53, 55) being formed to feed and remove workpiece carrier stacks (3, 5), and having a loading apparatus (20) suitable for grasping a workpiece from the workpiece carrier or the total workpiece carrier in the feed position and feeding it to the downstream processing station, the loading apparatus (20) being capable of serving the feed positions of the two or more pick-up apparatuses (12, 13).

2. A handling device according to claim 1, **characterized in that** the two or more pick-up apparatuses (12, 13) are disposed side by side, and their particular feed positions lie in a common plane.

3. A handling device according to claim 1 or claim 2, **characterized in that** the handling apparatus is formed as a cell closed all around having an access door (7, 8) to the first stacking area (53, 55) of each pick-up apparatus (12, 13), an upwardly open dividing wall (10, 11) between the first stacking area (53, 55) and second stacking area (54, 56) of each pick-up apparatus (12, 13), and a partition (9) between the first stacking areas (53, 55) of the pick-up apparatuses (12, 13).

4. A handling device according to claim 3, **characterized in that** the pick-up apparatuses (12, 13) each have a protective plate (12c, 13c) closing off the open area above the upwardly open dividing wall (10, 11) in a defined position of the particular pick-up apparatus (12, 13) so that the first stacking area (53, 55) is closed off all around.

5. A handling device according to claim 4, **characterized in that** the access doors (7, 8) each have a locking mechanism adapted to be unlocked when the pick-up apparatus (12, 13) is in the defined position.

6. A handling device according to any of the above claims, **characterized in that** it has a transfer device (14) for transferring workpieces into or out of a feed position.

7. A handling device according to any of the above claims, **characterized in that** an oil pan is provided under the stacking areas (53, 55) of each pick-up device (12, 13) and has in the first stacking areas a gap (41) corresponding roughly to the area of the workpiece carrier stacks (3, 5) to be processed.

8. A handling device according to any of the above claims, **characterized in that** the pick-up apparatus (12, 13) laterally attacks the workpiece carriers to be restacked and lifts them over the dividing wall (10, 11).

9. A method for feeding workpieces or workpiece carriers to a processing device, comprising the following steps:
(a) picking up a workpiece carrier from a workpiece carrier stack (3) in a first stacking area (53) of a first pick-up apparatus (12),
(b) moving the workpiece carrier to a feed position,
(c) grasping a workpiece from the workpiece carrier or the total workpiece carrier by means of a loading apparatus (20) from the feed position,
(d) feeding the workpiece or workpiece carrier to the downstream processing device by means of the loading apparatus (20) and returning the workpiece or workpiece carrier after processing,
(e) depositing the workpiece carrier in a second stacking area (54) of the pick-up apparatus (12) and repeating steps (a) - (e) until there are no more workpiece carriers in the first stacking area (53) of the pick-up apparatus (12),
(f) removing the workpiece carrier stack (4) and introducing a new workpiece carrier stack (3) to the first stacking area (53),
(g) before there is no more unprocessed workpiece or workpiece carrier to be grasped in the feed position according to step (c), picking up a workpiece carrier from a workpiece carrier stack (5) in a first stacking area (55) of a further pick-up apparatus (13) and moving the workpiece carrier to a further feed position, and
(h) at the latest when there is no more unprocessed workpiece or workpiece carrier to be grasped in the feed position according to step (c), performing steps (c) - (h) with respect to the workpiece carrier stack (5) in the first stacking area (55) of the further pick-up device (13).

10. A method according to claim 9, wherein before step (f) the workpiece carriers are restacked from the second stacking area (54, 56) of the pick-up apparatus (12, 13) to the first stacking area (53, 55) of the pick-up apparatus (12, 13).

11. A method according to claim 10, wherein steps (b) - (d) are also performed upon restacking.

12. A method according to claim 10, wherein steps (b) - (d) are only performed upon restacking.

13. A method according to any of claims 9 to 12, **characterized in that** the return of one or more workpieces or workpiece carriers after processing according to step (d) is effected to the feed position of the other pick-up apparatus.

## Revendications

1. Dispositif de manutention destiné à acheminer des pièces à usiner ou des porte-pièces vers une unité d'usinage montée en aval, comprenant deux ou plusieurs dispositifs de préparation (12, 13), qui comportent chacun une première et une deuxième zone d'empilement (respectivement 53, 55 et 54, 56) et sont destinés à prélever un porte-pièces dans une pile de porte-pièces (3 ou 4) dans la première zone d'empilement (53 ou 55) correspondante, de le déplacer vers une position d'admission, de l'empiler dans la deuxième zone d'empilement (54 ou 56) correspondante et de le retourner et empiler à nouveau dans la première zone d'empilement (53 ou 55), la première zone d'empilement (53 ou 55) étant conçue pour l'acheminement et pour le prélèvement de piles de porte-pièces (3 ou 5), et comprenant un dispositif de chargement (20) qui est destiné à saisir une pièce hors du porte-pièces ou le porte-pièces au complet dans la position d'admission et de l'acheminer vers le poste d'usinage monté en aval, le dispositif de chargement (20) pouvant desservir les positions d'admission des deux ou plusieurs dispositifs de préparation (12, 13).

2. Dispositif de manutention selon la revendication 1, **caractérisé en ce que** les deux ou plusieurs de dispositifs de préparation (12, 13) sont juxtaposés et leurs positions d'admission respectives sont situées dans un même plan.

3. Dispositif de manutention selon la revendication 1 ou 2, **caractérisé en ce que** le dispositif de manutention est conçu sous forme de cellule fermée sur tout le pourtour, comprenant respectivement une porte d'accès (7 ou 8) vers la première zone d'empilement (53 ou 55) d'un dispositif de préparation (12 ou 13), respectivement une cloison (10 ou 11) ouverte en haut, disposée entre la première zone d'empilement (53 ou 55) et la deuxième zone d'empilement (54 ou 56) des dispositifs de préparation (12 ou 13) et une cloison (9) entre les premières zones d'empilement (53, 55) des dispositifs de préparation (12, 13).

4. Dispositif de manutention selon la revendication 3, **caractérisé en ce que** les dispositifs de préparation (12, 13) comportent chacun un plateau de protection (12c ou 13c), qui, dans une position définie du dispositif de préparation (12 ou 13) concerné, obture la zone ouverte au-dessus de la cloison (10 ou 11) ouverte en haut, de telle sorte que la première zone d'empilement (53 ou 55) est fermée sur tout le pourtour.

5. Dispositif de manutention selon la revendication 4, **caractérisé en ce que** les portes d'accès (7, 8) sont munies chacune d'un mécanisme de verrouillage, qui peut être déverrouillé lorsque le dispositif de préparation (12, 13) est dans la position définie.

6. Dispositif de manutention selon une des revendications précédentes, **caractérisé en ce que** ledit dispositif comporte une unité de guidage (14) destinée à guider les pièces à usiner pour entrer dans une position d'admission ou pour sortir d'une position d'admission.

7. Dispositif de manutention selon une des revendications précédentes, **caractérisé en ce qu'**un réservoir d'huile est prévu en dessous des zones d'empilement (53, 55) de chacun des dispositifs de préparation (12 ou 13), lequel est muni dans chacune des premières zones d'empilement d'un évidement (41), qui correspond pratiquement à la surface de la pile de porte-pièces (3 ou 5) à traiter.

8. Dispositif de manutention selon une des revendications précédentes, **caractérisé en ce que** le dispositif de préparation (12, 13) entre en prise par le côté avec les porte-pièces à changer de pile et soulève ceux-ci au-dessus de la cloison (10 ou 11).

9. Procédé destiné à acheminer des pièces à usiner ou des porte-pièces vers une unité d'usinage, comprenant les étapes suivantes :
(a) prélèvement d'un porte-pièces dans une pile de porte-pièces (3) dans une première zone d'empilement (53) d'un premier dispositif de préparation (12),
(b) déplacement du porte-pièces vers une position d'admission,
(c) saisie d'une pièce à usiner hors du porte-pièces ou saisie du porte-pièces au complet hors de la position d'admission, au moyen d'un dispositif de chargement (20),
(d) acheminement de la pièce à usiner ou du porte-pièces vers le poste d'usinage monté en aval au moyen du dispositif de chargement (20) et retour de la pièce à usiner ou du porte-pièces après l'usinage,
(e) pose du porte-pièces dans une deuxième zone d'empilement (54) du dispositif de préparation (12) et reprise des étapes (a) à (e), jusqu'à ce qu'il ne reste plus de porte-pièces dans la première zone d'empilement (53) du dispositif de préparation (12),
(f) évacuation de la pile de porte-pièces (4) et admission d'une nouvelle pile de porte-pièces (3) dans la première zone d'empilement (53),
(g) avant qu'aucune pièce non usinée individuelle ou aucun porte-pièces ne puisse plus être saisi selon l'étape (c) dans la position d'admission, prélèvement d'un porte-pièces dans une pile de porte-pièces (5) dans une première zone d'empilement (55) d'un autre dispositif de préparation (13) et déplacement du porte-pièces dans une autre position d'admission, et
(h) au plus tard lorsque aucune pièce non usinée ou aucun porte-pièces ne peut être saisi selon l'étape (c) dans la position d'admission, mise en oeuvre des étapes (c) à (h) pour la pile de porte-pièces (5) dans la première zone d'empilement (55) de l'autre dispositif de préparation (13).

10. Procédé selon la revendication 9, dans lequel avant l'étape (f), les porte-pièces de la deuxième zone d'empilement (54 ou 56) du dispositif de préparation (12 ou 13) sont retournés vers la première zone d'empilement (53 ou 55) du dispositif de préparation (12 ou 13) et y sont à nouveau empilés.

11. Procédé selon la revendication 10, dans lequel les étapes (b) à (d) sont aussi effectuées pendant l'empilement après le retour des pièces.

12. Procédé selon la revendication 10, dans lequel les étapes (b) à (d) sont effectuées uniquement pendant l'empilement après le retour des pièces.

13. Procédé selon une des revendications 9 à 12, **caractérisé en ce que** le retour d'une ou de plusieurs pièces à usiner ou porte-pièces à l'issue de l'usinage est effectué selon l'étape (d) dans la position d'admission de l'autre dispositif de préparation.
